(19)

Europäisches
Patentamt

European
Patent Office

Office européen
des brevets

(11)　**EP 1 885 054 B1**

(12)　**EUROPEAN PATENT SPECIFICATION**

(45) Date of publication and mention
of the grant of the patent:
**07.10.2009　Bulletin 2009/41**

(51) Int Cl.:
*H02P 21/13* (2006.01)　*H02P 21/14* (2006.01)
*G05B 13/04* (2006.01)

(21) Application number: **06425561.5**

(22) Date of filing: **03.08.2006**

(54) **Method of estimating the state of a system and related device for estimating position and speed of the rotor of a brushless motor**

Verfahren zur Zustandsschätzung eines Systems und eine zugehörige Vorrichtung zur Ermittlung der Position und der Drehzahl eines bürstenlosen Motors

Procédé d'estimation de l'état d'un système et un appareil associé pour estimer la position et la vitesse du rotor d'un moteur sans balai

(84) Designated Contracting States:
**DE FR GB IT**

(43) Date of publication of application:
**06.02.2008　Bulletin 2008/06**

(73) Proprietor: **STMicroelectronics S.r.l.**
**20041 Agrate Brianza (Milano) (IT)**

(72) Inventors:
- **Cesario, Nicola**
**80013 Casalnuovo di Napoli (IT)**
- **Baratto, Stefano**
**80128 Napoli (IT)**
- **Di Meglio, Maurizio**
**80026 Casoria (IT)**

(74) Representative: **Pellegri, Alberto et al**
**Società Italiana Brevetti S.p.A.**
**Via Avegno, 6**
**21100 Varese (IT)**

(56) References cited:
**US-A1- 2003 060 902**　　**US-A1- 2005 007 044**

- **ALANIS, A.Y.; SANCHEZ, E.N.; LOUKIANOV, A.G.: "Discrete- Time Recurrent Neural Induction Motor Control using Kalman Learning" IJCNN 2006, INTERNATIONAL JOINT CONFERENCE ON NEURAL NETWORKS, July 2006 (2006-07), pages 1993-2000, XP002410493**

**Description**

FIELD OF THE INVENTION

This invention relates the techniques for estimating the evolution of a system and more particularly to a method for estimating the state of a system. The method of this invention may be used for estimating position and speed of a brushless motor without employing speed and position sensors and may be implemented in a hardware form. The invention further relates to a device for generating estimation signals of position and speed of the rotor of a brushless motor, to a feedback control device of a brushless motor and to a power steering system that implement the method of this invention.

BACKGROUND OF THE INVENTION

Electric motors are used in the automotive field not only in electrically powered cars but also as actuators in servo-systems for driving pumps, compressors and the like.

Many functional devices of a car are motorized, such as the fuel pump, the over-modulation compressor, the transmission gears, the power steering, and so forth.

Traditionally, these functional devices were servo-assisted by exploiting the motor torque available on the shaft of the thermal engine of the car. This implied inefficiencies in using part of the mechanical energy obtained by burning fuel for powering these devices. Lately the use of electric motors, that notoriously convert electric energy into mechanical energy, has become more and more the preferred choice. Permanent magnet brushless motors are often preferred in these automotive applications. The characteristics of permanent magnet brushless motors are particularly suitable for automotive applications: they are relatively lightweight, have a high power density, a small size and are very reliable, though they are relatively expensive (due to the costs of the magnets used for fabricating the rotor), more difficult to control than a traditional DC electrical machine, and require more or less precise angular position sensors (depending on the brushless motor and the control strategy).

In particular, when implementing control strategies that contemplate a sinusoidal modulation of the PWM (Pulse Width Modulation), whether DC (trapezoidal induced back electromotive force) or AC (sinusoidal induced back electromotive force), it is necessary to use sensors of the angular position, such as (incremental or absolute) encoders and resolvers that are relatively expensive (encoders) or require complicated sensing techniques (resolvers).

For these reasons, the use of sensorless control algorithms that, based upon the detection of quantities the value of which is measurable and/or available in a simple and economic way, provide a more or less approximated estimation of the angular position of the rotor. Many applications do not allow to use sensorless techniques because, particularly model-based techniques (that is the techniques based on a mathematic model of the physical system) do not allow an accurate estimation of the angular position at low speeds and do not provide any estimation at practically null speed.

In certain applications this problem is eliminated by implementing alignment procedures and by using start-up ramps destined to initialize the sensorless algorithm. It is evident that certain applications, such as for example electrically assisted power steering systems, do not allow pauses between the instant of application of the reference signal and its effective actuation. For these applications, that are safety-critical applications, sensorless algorithms may be a reliable alternative.

Often in traditional control systems, a second angular position sensor is commonly installed for controlling that the first sensor be working correctly. Indeed, a sensorless estimation algorithm could compensate errors due to aging or to alterations of the main sensor, making superfluous the second sensor and thus solving the drawback of its encumbrance.

Many examples of use of estimators of the angular position of the rotor of a permanent magnet brushless machine may be found in literature [4]. In particular, as far as the model-based approaches are concerned, one of the most used techniques is based on the so-called "state observers" for monitoring the state of the system. In this case it is necessary to know at least roughly a mathematical model of the electric machine.

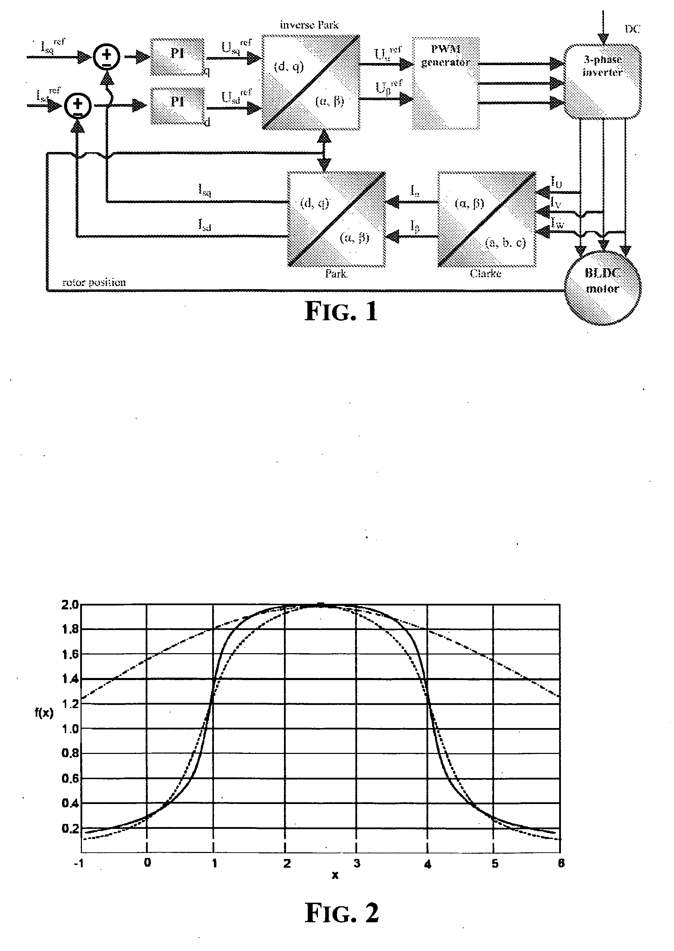

Figure 1 illustrates the block diagram of a typical field oriented control of a permanent magnet brushless machine (BLDC). The feedback signals, $I_{sd}$ (direct current) and $I_{sq}$ (quadrature current), that the PI controllers compare with the reference currents $I_{sd}^{ref}$ and $I_{sq}^{ref}$, are obtained with a double transform of the phase currents of the motor $I_U$, $I_V$ and $I_W$. These currents, measured by sensors, are first transformed from the three-phase statoric reference system to a two-phase statoric reference system (Clarke transform),

$$I_\alpha = I_U$$
$$I_\beta = \frac{I_U}{\sqrt{3}} + \frac{2I_V}{\sqrt{3}}$$
$$0 = I_U + I_V + I_W \qquad\qquad (1)$$

In order to transform the currents $I_\alpha$, $I_\beta$ in a rotoric reference system (that is a time invariant system of coordinates) a further transform is necessary (Park transform) in which the angular position θ of the rotor is used:

$$I_{sd} = I_\alpha \cos(\theta) + I_\beta \sin(\theta)$$
$$I_{sq} = -I_\alpha \sin(\theta) + I_\beta \cos(\theta) \qquad\qquad (2)$$

The PI controllers (that is the controllers with a proportional-integral action), generate reference voltages $U_{sd}^{ref}$ and $U_{sq}^{ref}$ in function of the difference between the reference currents and the feedback currents. These voltages, after having been transformed with the inverse of the Park transform,

$$U_\alpha^{ref} = U_{sd}^{ref} \cos(\theta) - U_{sq}^{ref} \sin(\theta)$$
$$U_\beta^{ref} = U_{sd}^{ref} \sin(\theta) + U_{sq}^{ref} \cos(\theta) \qquad\qquad (3)$$

are supplied to the PWM generator.

The dynamics of the brushless motor may be studied both in the system of coordinates (d,q) as well as in the system (α,β). In the system (d,q), the dynamics of the system is expressed by the following equations:

$$L_{sq}\dot{I}_{sq} = -L_{sd}z_p\dot{\theta}I_{sd} - c_M\dot{\theta} - R_s I_{sq} + U_{sq}$$
$$L_{sd}\dot{I}_{sd} = L_{sq}z_p\dot{\theta}I_{sq} - R_s I_{sd} + U_{sd}$$
$$J_M\ddot{\theta} = -b_M\dot{\theta} + c_M I_{sq} - M_{load} \qquad\qquad (4)$$

wherein $z_p$ indicates the number of polar pairs, $c_M$ the constant of the electric machine (that is the ratio between the generated torque and the current $I_{sq}$ circulating when the rotor is blocked), $R_s$ and $L_s$ the resistance and the inductance of the windings, $U_{sd}$ and $U_{sq}$ the reference voltages. As far as the equation of mechanical equilibrium is concerned, $J_M$, $b_M$ and $M_{load}$ indicate the momentum of inertia, a dampening coefficient and the load moved by the electric machine, respectively.

In most of the followed approaches, the dynamics of the brushless motor is approximated with that of a DC motor, that is it is assumed that $I_{sd}$ be null. In practice, equations (4) are simplified as follows:

$$L_{sq}\dot{I}_{sq} = -c_M\dot{\theta} - R_s I_{sq} + U_{sq}$$
$$J_M\ddot{\theta} = -b_M\dot{\theta} + c_M I_{sq} - M_{load} \qquad\qquad (5)$$

The values of state variables of the brushless motor, that in equation (5) are the current $I_{sq}$ and the speed $\dot{\theta}$, may be estimated with the so-called "state estimators", that are algorithms for calculating the values of state variables of a system, if a mathematical model thereof defined in function of the detected inputs and outputs variables is known.

A state observer that is largely used for controlling brushless motors is the so-called Luenberg state observer [4].

This state observer, even if it is relatively simple, applies only for systems the dynamics of which is described by linear equations. In practice, it may be applied for tracking the kinematics of the rotor of a brushless electric machine if the approximation of equations (5) is reasonable.

In case it is not possible to estimate the angular position by using the linear equations (5), the parameters of the observer must be estimated by introducing a Lyapunov function to be minimized.

This technique is rather complicated because it presumes that an exact model of the motor be known and an appropriate choice of the Lyapunov function to be minimized. Moreover, it is necessary to estimate at least two of the three phase currents of the motor and the supply voltages.

A state observer that considers also the noise that disturbs the measurement of the values of state variables is the extended Kalman filter. In order to better understand the field of application of this invention, the functioning of an extended Kalman filter is briefly explained.

**Extended Kalman Filter**

From a statistical point of view, the optimal state observer is the Kalman filter. The gain of the filter is calculated considering also the statistical properties of the noise of the process (uncertainty relative to the knowledge of the dynamics of the system) and of the measurement error.

The extended Kalman filter (EKF) is an improvement of the Kalman filter suitable for systems having a nonlinear dynamics and may be used for estimating speed and position of the rotor. Therefore, it is possible to use equations (4) as a mathematical model of the brushless motor.

The advantage in respect to other "model-based" approaches (such as the Luenberger state observer) consists in not needing to use a linear approximation of the nonlinear mathematical model that describes the dynamics of the motor.

The extended Kalman filter applies to discrete-time state equations such as:

$$\overline{x(k+1)} = \overline{f(\overline{x(k)}, \overline{u(k)})} + \overline{v(k)} \qquad \overline{x(0)} = \overline{x_0}$$
$$\overline{y(k)} = \overline{g(\overline{x(k)})} + \overline{w(k)} \tag{6}$$

being

$\overline{x(k)}$ the state of the system,
$\overline{u(k)}$ the input of the system,
$\overline{y(k)}$ the output of the system,
$\overline{v(k)}$ the process noise,
$\overline{w(k)}$ the measurement noise

detected at the step k and in which the functions $\overline{f(.)}$ and $\overline{g(.)}$ are two generic nonlinear vector functions with vector variables. The process noise $\overline{v(k)}$ and the measurement noise $\overline{w(k)}$ are uncorrelated between them, have a null average and are characterized by the respective covariance matrices $\overline{\overline{Q}}$ and $\overline{\overline{R}}$ :

$$\overline{\overline{Q}} = E\left\{\overline{v(k)} \cdot \overline{v(k)^T}\right\}; \qquad \overline{\overline{R}} = E\left\{\overline{w(k)} \cdot \overline{w(k)^T}\right\}.$$

In order to apply the EKF to a system of continuous-time nonlinear system of equation, the system of nonlinear equations is linearized and discretized around sampling instants taken at constant intervals, thus the standard Kalman filter is applied to the linearized system of discrete-time equations.

The a priori estimation of the state variables $\hat{x}(k+1|k)$ of the system at the step $k+1$ is a function of the a priori estimation $\overline{x(k|k)}$ and of the measure of the input variables $\overline{u(k)}$ at step $k$, that is:

$$\hat{x}(k+1|k) = \overline{f\left(\hat{x}(k|k),\overline{u(k)}\right)} \tag{7}$$

In order to calculate the a posteriori estimation $\hat{x}(k|k)$ , the measurement of the output $\hat{y}(k)$ of the system at the current step is used, that is

$$\hat{x}(k|k) = \hat{x}(k|k-1) + \overline{K(k)} \cdot \left( \overline{y(k)} - \overline{g\left(\hat{x}(k|k-1),\overline{u(k)}\right)} \right) \tag{8}$$

being $\overline{K(k)}$ the gain of the Kalman filter at the step k, that is tied to the values of the covariance matrices of the process and measurement noise.

In order to make the Kalman filter provides accurate estimations of the outputs of the system, the values of the matrix of gains $\overline{K(k)}$ are adjusted such that the estimated values of the outputs $\overline{g(\hat{x}(k|k-1),\overline{u(k)})}$ by the Kalman filter be as close as possible to the effectively measured outputs $\overline{y(k)}$.

By linearizing and discretizing a system of input-state-output equations, the result is that the variation of the state of the system from step *k* to step *k*+1, that is

$$\overline{\Delta x(k)} = \frac{\overline{x(k+1)} - \overline{x(k)}}{T_s}$$

may be described as follows:

$$\overline{\Delta x(k+1)} = \overline{F_1(k)} \cdot \overline{\Delta x(k)} + \overline{F_2(k)} \cdot \overline{\Delta u(k)} + \overline{v(k)} \qquad \overline{x(0)} = \overline{x_0}$$
$$\overline{\Delta y(k)} = \overline{C(k)} \cdot \overline{\Delta x(k)} + \overline{w(k)} \tag{9}$$

and the gain $\overline{K(k)}$ of the EKF filter is:

$$\overline{K(k)} = \overline{P(k|k-1)} \cdot \overline{C(k)}^T \cdot \left( \overline{C(k)} \cdot \overline{P(k|k-1)} \cdot \overline{C(k)}^T + \overline{R} \right)^{-1}$$

with

$$\overline{P(k+1|k)} = \overline{F_1(k)} \cdot \overline{P(k|k)} \cdot \overline{F_1(k)}^T + \overline{Q}$$

$$\overline{P(k|k)} = \left( \overline{I} - \overline{K(k)} \cdot \overline{C(k)} \right) \cdot \overline{P(k|k-1)}$$

being $\overline{P(k+1|k)}$ and $\overline{P(k|k)}$ covariance matrices associated to the estimations of the state a priori and a posteriori, respectively. The latter express the uncertainties that affect the a priori and a posteriori estimations of the state, respectively. For the system of equations that describe a brushless motor, choosing as state, input and output variables the following quantities:

$$\overline{x} = \left[ I_{sq}, I_{sd}, \omega, \theta \right]^T ; \qquad \overline{u} = \left[ U_{sq}, U_{sd} \right]^T ; \qquad \overline{y} = \left[ I_{sq}, I_{sd}, \omega, \theta \right]^T ;$$

being $\omega = \dot{\theta}$, it is:

$$\overline{f(\overline{x},\overline{u})} = T_S \begin{pmatrix} -\dfrac{R_s \cdot I_{sd}}{L_s} + z_p \cdot \omega \cdot I_{sq} \\ -\dfrac{R_s \cdot I_{sq}}{L_s} - z_p \cdot \omega \cdot I_{sd} - \dfrac{c_M \omega}{L_s} \\ -\dfrac{b_M}{J_M}\omega + \dfrac{c_M}{J_M} I_{sq} \\ \omega \end{pmatrix} + \begin{pmatrix} \dfrac{U_{sd}}{L_s} \\ \dfrac{U_{sq}}{L_s} \\ -\dfrac{M_{load}}{J_M} \\ 0 \end{pmatrix} ; \qquad \overline{g(\overline{x},\overline{u})} = \begin{pmatrix} I_{sd} \\ I_{sq} \\ \omega \\ \theta \end{pmatrix} \quad (10)$$

having supposed, for sake of simplicity, $L_{sd} = L_{sq} = L_s$. As a consequence:

$$\overline{\overline{F_1(k)}} = \left[ \nabla_{\overline{x}} \overline{f(\overline{x},\overline{u})} \right]_{\overline{x}=\overline{x(k)}, \overline{u}=\overline{u(k)}} = T_s \begin{pmatrix} -\dfrac{R_s}{L_s} & z_p \cdot \omega(k) & z_p \cdot I_{sq}(k) & 0 \\ -z_p \cdot \omega(k) & -\dfrac{R_s}{L_s} & -\dfrac{c_M}{L_s} - z_p \cdot I_{sd} & 0 \\ 0 & \dfrac{c_M}{J_M} & -\dfrac{b_M}{J_M} & 0 \\ 0 & 0 & 1 & 0 \end{pmatrix}$$

$$\overline{\overline{C(k)}} = \left[ \nabla_{\overline{x}} \overline{g(\overline{x},\overline{u})} \right]_{\overline{x}=\overline{x(k)}, \overline{u}=\overline{u(k)}} = \begin{pmatrix} 1 & 0 & 0 & 0 \\ 0 & 1 & 0 & 0 \\ 0 & 0 & 1 & 0 \\ 0 & 0 & 0 & 1 \end{pmatrix}$$

In practice, the EKF may be used when the covariance matrices of the process noise $\overline{\overline{Q}}$ and of the measurement noise $\overline{\overline{R}}$ are known. If these matrices are known, it is possible to calculate at each step the gain of the EKF and thus to estimate the state of the system. In [4] different model-based approaches are compared for estimating the angular position of the rotor of a permanent magnet brushless machine, a Luenberger state observer, a reduced Luenberger state observer, an EKF and so on. The best performances in terms of accuracy in tracking the kinematics of the rotor are provided by the EKF. In the cited article the computational loads (that is scalar multiplications, integrations, trigonometric functions) of the various approaches are compared among them, and it results that the EKF is very burdensome form a computational point of view.

As for other model-based approaches, there is no a deterministic and objective method for determining the covariance matrices of the measurement and process noise, and they must be fixed for using the extended Kalman filter. An imprecise estimation of the matrices $\overline{\overline{Q}}$ and $\overline{\overline{R}}$ may cause an imprecise control of the system to be controlled.

Moreover, an inappropriate choice of the values of the components of the covariance matrix $\overline{P(0|0)}$ associated to the estimation a posteriori of the initial state may worsen sensibly the precision of the control.

The published patent application US 2005/0007044 discloses a method and an apparatus for realizing a state observer control system for a motor that uses an extended Kalman filter to predict rotor positions and/or speed under variable loading conditions.

The article by Alma Y. Alanis et al., "Discrete-time recurrent neural induction motor control using Kalman learning", IJCNN 2006, International Joint Conference on Neural Networks, July 2006, pages 1993-2000, XP002410493, discloses a technique for tracking evolutions of discrete-time induction motors in presence of bounded disturbances, using a high order neural network structure to identify the plant model and a discrete-time control law that combines discrete time and sliding control modes.

## SUMMARY OF THE INVENTION

These drawbacks are obviated with the method of this invention for estimating data of the state of a system. The method of this invention, as well as the EKF filters, allows to use nonlinear mathematical models that describe the systems, but ensures a more accurate precision.

This outstanding result is due to the fact that the method of this invention is based on the EKF technique, but it differs from it for adapting it to work with a filter that implements a first degree Stirling approximation formula.

Moreover, the matrices $\overline{\overline{Q}}$, $\overline{\overline{R}}$ and $\overline{\overline{P(0|0)}}$ are estimated during an off-line training phase by means of an evolutionary algorithm for minimizing a pre-established cost function defined in function of the estimated outputs of the system, of the detected outputs, of the estimated values of at least a state of the system and of the corresponding detected values in response to a pre-established input pattern. This allows even to obtain accurate estimations of data of state of a system without knowing all initial conditions.

Preferably, the cost function is the mean square error of the difference between the estimated and the measured outputs and between the estimated values of at least a state variable of the system and the corresponding detected values, in response to a pre-established input pattern.

Once the off-line training phase is finished, the matrices $\overline{\overline{Q}}$, $\overline{\overline{R}}$ and $\overline{\overline{P(0|0)}}$ are known and it is possible to estimate data of state starting from the inputs and the outputs of the system. In practice, by applying the just described technique to a brushless motor, it is possible to estimate position and speed of the rotor of the motor without installing dedicated sensors thereon, but simply by detecting the currents that flows through the windings (that are the outputs of the brushless motor) and the driving voltages of the motor (that are the inputs of the motor).

The method of this invention for estimating position and speed of a brushless motor may be implemented in a relative device. Such a device may be used for controlling a brushless motor, or it may be introduced in the control loop of a brushless motor of a power steering system, in order to make the driver feel an antagonist torque on the steering wheel determined, according to a pre-established waveform, in function of the speed of the vehicle and of the steering angle.

Alternatively, the methods of this invention may even be implemented via software by a program executed by a computer or a microprocessor.

The invention is defined in the annexed claims.

## BRIEF DESCRIPTION OF THE DRAWINGS

**Figure 1** depicts a block diagram of a typical field oriented control of a permanent magnet brushless machine.

**Figure 2** compares the second order polynomial approximations of a function f (solid line) obtained respectively with the Stirling interpolation formula (dot-dashed line) and with the series of Taylor (dashed line).

**Figure 3** is a block diagram of the model of state observer of this invention used for tracking the kinematics of the rotor of a permanent magnet brushless machine (i.e. BLDC motor).

**Figure 4** schematically depicts the operation carried out by the evolutionary algorithms on the covariance matrices of the state variables and on the covariance matrix of the process noise.

**Figure 5** depicts a block diagram of a column EPS system in HILS (Hardware-In-The-Loop Simulation) configuration.

**Figure 6** depicts a torque sensor used for measuring the steering torque TS felt by a driver while steering.

Figure 7 depicts schematically the rack-pinion system associated to the considered EPS system.

**Figure 8** depicts a typical waveform of the load torque (solid line) due to friction between the road and the wheels in function of the steering angle (dashed line) determined by a driver during the motion of a vehicle.

**Figure 9** depicts a block diagram of the control logic for reducing the steering torque in an EPS system of this invention.

**Figure 10** depicts a possible waveform of the reference steering torque in function of the speed of the vehicle and of the steering angle.

**Figure 11** is a sample 3-D representation of a typical look-up table used for describing how the reference steering torque depends on the vehicle speed and on the steering angle.

**Figure 12** compares the waveform of the estimated position of the rotor in function of the time with that measured by an ad hoc sensor and with that estimated using only an input-state-output mathematical model of the system, using a specific test pattern and ignoring the initial position of the rotor.

**Figure 13** is a magnified view of a portion of the graph of Figure 12 between about 0.8 and 1.15 seconds.

**Figure 14** is a magnified view of a portion of the graph of Figure 12 between about 0.2 and 0.225 seconds.

**Figure 15** compares the estimated speed of the rotor according to the method of this invention with that measured by an ad hoc sensor and with that estimated using only an input-state-output mathematical model of the system.

**Figure 16** is a magnified view of a portion of the graph of Figure 12 between about 1.7 and about 1.95 seconds.

**Figure 17** compares the speed of the rotor estimated according to the method of this invention with that measured by an ad hoc sensor and with that estimated using only an input-state-output mathematical model of the system, ignoring the initial speed of the rotor.

**Figure 18** compares the rotor position estimated by the non optimized state observer DD1 with the position of the rotor measured by an ad hoc sensor and with the angular position of the rotor estimated using only an input-state-output mathematical model of the system, ignoring both the initial speed and the initial position of the rotor.

DESCRIPTION OF AN EMBODIMENT OF THE INVENTION

This invention discloses a method based on a so-called free-derivative state observer for estimating data of state variables of a system that may be used, in particular, for estimating, in a sensorless fashion, speed and position of the rotor of a brushless motor without installing dedicated sensors.

Compared with other model-based approaches used for tracking the kinematics of the rotor (such as the Extended Kalman Filter), the method of this invention is advantageous both from the point of view of the computational load required for its implementation and from the point of view of the rapidity of its response and the accuracy of its estimations.

As far as the tuning of parameters of the "free derivative" filter is concerned, the method of this invention uses a soft computing procedure based on the use of evolutionary algorithms.

The method has been tested on an EPS application (Electric Power Steering), that is on specific application patterns of an EPS system wherein the brushless motor is used for providing a torque for helping the driver while steering.

In order to better understand the method of this invention, a brief introduction to "free derivative" observers is provided hereinbelow.

Numerous articles available in literature show how in different applications concerning systems with nonlinear dynamics the use of free-derivative state observers for estimating the state variables of the systems provides more accurate results than traditional approaches such as EKF [3].

Before showing how a free-derivative state observer can be used for carrying out an accurate tracking of the kinematics of the rotor of a permanent magnet brushless machine, a brief introduction to the techniques used for developing this state observer is provided. In particular, a different way of approximating locally an arbitrary function without using the classic Taylor expansion of the function will be shown.

**Stirling approximation formula**

Given an analytic function $f$, it may be represented in a neighborhood of a point $\overline{x}$ with the well known Taylor series expansion,

$$f(x) = f(\overline{x}) + f'(\overline{x})(x - \overline{x}) + \frac{f^{(2)}(\overline{x})}{2}(x - \overline{x})^2 + \frac{f^{(3)}(\overline{x})}{6}(x - \overline{x})^3 + .... \quad (11)$$

In general, with the Taylor series expansion, the more elements of the series are considered, the more accurate is the approximation of the function.

There are various formulas for interpolating functions that do not require the calculation of derivatives but simply need evaluating the function in a finite number of points. Implementation of these interpolating formulas is simpler than traditional interpolating formulas.

One of the most known interpolating formulas is the Stirling formula. Given two operators $\delta$ and $\mu$ such that

$$\delta f(x) = f\left(x + \frac{h}{2}\right) - f\left(x - \frac{h}{2}\right)$$

$$\mu f(x) = \frac{1}{2}\left(f\left(x + \frac{h}{2}\right) + f\left(x - \frac{h}{2}\right)\right) \tag{12}$$

the approximation of the function f in the neighborhood of a point x may be expressed as follows,

$$f(x) = f(\overline{x} + ph) = f(\overline{x}) + p\mu\delta f(\overline{x}) + \frac{p^2}{2}\delta^2 f(\overline{x}) + \binom{p+1}{3}\mu\delta^3 f(\overline{x}) +$$

$$+ \frac{p^2(p^2 - 1)}{2 \cdot 3 \cdot 4}\delta^4 f(\overline{x}) + \binom{p+2}{5}\mu\delta^5 f(\overline{x}) + .... \tag{13}$$

wherein -1<$p$<1. By limiting the polynomial approximation to the second order,

$$f(x) \approx f(\overline{x}) + f'_{DD}(\overline{x})(x - \overline{x}) + \frac{f''_{DD}(\overline{x})}{2}(x - \overline{x})^2 \tag{14}$$

wherein

$$f'_{DD}(\overline{x}) = \frac{f(\overline{x} + h) - f(\overline{x} - h)}{2h} \qquad f''_{DD}(\overline{x}) = \frac{f(\overline{x} + h) + f(\overline{x} - h) - 2f(\overline{x})}{h^2} \tag{15}$$

Equation (14) may be interpreted as a Taylor approximation in which the derivatives are substituted by central finite differences such as equations (15). In order to evaluate the accuracy of the approximation it is sufficient to substitute in equation (14) the Taylor series expansion (equation (11)) in place of $f(\overline{x} + h)$ and $f(\overline{x} - h)$. Therefore,

$$f(\overline{x}) + f'_{DD}(\overline{x})(x - \overline{x}) + \frac{f''_{DD}(\overline{x})}{2}(x - \overline{x})^2 = f(\overline{x}) + f'(\overline{x})(x - \overline{x}) + \frac{f''(\overline{x})}{2}(x - \overline{x})^2 +$$

$$+ \left(\frac{f'^{(3)}(\overline{x})h^2}{2 \cdot 3} + \frac{f'^{(5)}(\overline{x})h^4}{2 \cdot 3 \cdot 4 \cdot 5} + ...\right)(x - \overline{x}) + \left(\frac{f'^{(4)}(\overline{x})h^2}{2 \cdot 3 \cdot 4} + \frac{f'^{(6)}(\overline{x})h^4}{2 \cdot 3 \cdot 4 \cdot 5 \cdot 6} + ...\right)(x - \overline{x})^2 \tag{16}$$

From equation (16) it is possible to infer that the polynomial approximation to the second order based on the Stirling formula coincides with the Taylor approximation of the function to the second order but for a remainder (that is of the two last terms at the right side of equation (16)) the value of which may be controlled through the parameter $h$.
This is one of the characteristics that characterize the Stirling interpolation formula and thus makes the approximation of functions with this formula more flexible in than with traditional approaches.
Figure 2 compares the polynomial approximation to the second order of a function $f$ in the neighborhood of a point $\overline{x}$ carried out respectively with the Stirling approximation formula and the Taylor series expansion. It is possible to infer that the approximation obtained with the Taylor series expansion worsen significantly the more we get far from point $\overline{x}$. The Stirling interpolation formula of the second order, with the parameter h equal to 3.5 fairly approximates the function even relatively far from the point of interest.

**EP 1 885 054 B1**

The Stirling approximation formula of the second order (equation (14)) in the multi-dimensional case assumes the following form:

$$f(x) \approx f(\bar{x}) + \widetilde{D}_{\Delta x} f + \frac{\widetilde{D}^2_{\Delta x} f}{2} \qquad (17)$$

where operators $\widetilde{D}_{\Delta x}$ and $\widetilde{D}^2_{\Delta x}$ are defined by the following equations:

$$\widetilde{D}_{\Delta x} f = \frac{1}{h} \left( \sum_{p=1}^{n} \Delta x_p \mu_p \delta_p \right) f(\bar{x})$$

$$\widetilde{D}^2_{\Delta x} f = \frac{1}{h^2} \left( \sum_{p=1}^{n} (\Delta x_p)^2 \delta_p^2 + \sum_{p=1}^{n} \sum_{q=1, q \neq p}^{n} \Delta x_p \Delta x_q \delta_p^2 (\mu_p \delta_p)(\mu_q \delta_q) \right) f(\bar{x})$$

$$(18)$$

In equations (18) $\mu_p$ and $\delta_p$ represent the average and difference operators, respectively.
One of the characteristics of equation (17) consists in that it is relevantly simplified by using a particular linear transform in the variable x. Let us consider the following linear transform:

$$z = S^{-1} x \qquad (19)$$

and the function

$$\widetilde{f}(z) = f(Sz) = f(x) \qquad (20)$$

While the Taylor series expansions of $f$ and $\widetilde{f}$ in a neighborhood of points $\bar{x}$ and $\bar{z}$, respectively, is the same, the Stirling approximation formula does not provide the same result:

$$2\mu_p \delta_p \widetilde{f}(\bar{z}) = \widetilde{f}(\bar{z} + he_p) - \widetilde{f}(\bar{z} - he_p) = f(\bar{x} + hs_p) - f(\bar{x} - hs_p) \qquad (21)$$

wherein $e_p$ is the unity vector with $p$ components, that is:

$$e_p = \begin{bmatrix} 1 \\ \vdots \\ 1 \end{bmatrix}$$

and sp indicates the $p$-th column of matrix $S$. It is possible to show that with an appropriate choice of the linear transform $S$ and of the parameter $h$ it is possible to optimize the approximation of a function f of a stochastic variable.

Let us suppose to know mean and covariance of a vector x of stochastic variables,

$$\bar{x} = E[x], \quad P_x = E\left[(x - \bar{x})(x - \bar{x})^T\right] \qquad (22)$$

and of determining average, covariance and stochastic correlation of a function f of the variable x,

$$
\begin{aligned}
\bar{y} &= E\left[f(x)\right] \\
P_y &= E\left[(f(x) - \bar{y})(f(x) - \bar{y})^T\right] \\
P_{xy} &= E\left[(x - \bar{x})(f(x) - \bar{y})^T\right]
\end{aligned}
\qquad (23)
$$

Let us calculate the above mentioned mean values using an approximation of the function based on the Stirling approximation formula. In this context it is particularly useful a linear transform such as

$$z = S^{-1}x \qquad (24)$$

where the matrix S is the Cholesky factor of the covariance matrix $P_x$, that is it is a upper triangular matrix for which the following equation:

$$P_x = SS^T \qquad (25)$$

Hereinafter only the function $\tilde{f}(z)$ defined by equation (20) will be considered. Given a first order approximation of the function $\tilde{f}(z)$,

$$y = \tilde{f}(\bar{z} + \Delta z) \approx \tilde{f}(\bar{z}) + \tilde{D}_{\Delta z}\tilde{f} \qquad (26)$$

being $E[\Delta z] = 0$, the expected value of y, that is the average of the function $\tilde{f}(z)$ is

$$\bar{y} = E\left[\tilde{f}(\bar{z}) + \tilde{D}_{\Delta z}\tilde{f}\right] = \tilde{f}(\bar{z}) = f(\bar{x}) \qquad (27)$$

As far as the expected value of the covariance is concerned, considering that $E[\Delta z] = 0$ and that $E_L[\Delta z_i \Delta z_j] = 0$, $i \neq j$, the following equation holds:

$$P_y = E\left[\left(\tilde{f}(\bar{z}) + \tilde{D}_{\Delta z}\tilde{f} - \tilde{f}(\bar{z})\right)\left(\tilde{f}(\bar{z}) + \tilde{D}_{\Delta z}\tilde{f} - \tilde{f}(\bar{z})\right)^T\right]$$

$$= E\left[\left(\tilde{D}_{\Delta z}\tilde{f}(z)\right)\left(\tilde{D}_{\Delta z}\tilde{f}(z)\right)^T\right] = E\left[\left(\sum_{p=1}^{n}\Delta z_p \mu_p \delta_p \tilde{f}(\bar{z})\right)\left(\sum_{p=1}^{n}\Delta z_p \mu_p \delta_p \tilde{f}(\bar{z})\right)^T\right]$$

$$= \sigma_2 \sum_{p=1}^{n}\left(\mu_p \delta_p \tilde{f}(\bar{z})\right)\left(\mu_p \delta_p \tilde{f}(\bar{z})\right)^T$$

$$= \frac{1}{4h^2}\sum_{p=1}^{n}\left(\tilde{f}(\bar{z} + he_p) - \tilde{f}(\bar{z} - he_p)\right)\left(\tilde{f}(\bar{z} + he_p) - \tilde{f}(\bar{z} - he_p)\right)^T \tag{28}$$

Exploiting equation (21), the final formula is obtained

$$P_y = \frac{1}{4h^2}\sum_{p=1}^{n}\left(f(\bar{x} + hs_{x,p}) - f(\bar{x} - hs_{x,p})\right)\left(f(\bar{x} + hs_{x,p}) - f(\bar{x} - hs_{x,p})\right)^T \tag{29}$$

It is possible to verify that the cross-covariance matrix $P_{xy}$ is

$$P_{xy} = \frac{1}{2h}\sum_{p=1}^{n}s_{x,p}\left(f(\bar{x} + hs_{x,p}) - f(\bar{x} - hs_{x,p})\right)^T \tag{30}$$

Using a second order approximation of the function $\tilde{f}(z)$,

$$y \approx \tilde{f}(\bar{z}) + \tilde{D}_{\Delta z}\tilde{f} + \frac{1}{2}\tilde{D}_{\Delta z}^2\tilde{f} = \tilde{f}(\bar{z}) + \frac{1}{h}\left(\sum_{p=1}^{n}\Delta z_p \mu_p \delta_p\right)\tilde{f}(\bar{z})$$

$$+ \frac{1}{2h^2}\left(\sum_{p=1}^{n}(\Delta z_p)^2 \delta_p^2 + \sum_{p=1}^{n}\sum_{q=1,q\neq p}^{n}(\Delta z_q \Delta z_p)(\mu_p \mu_q)(\delta_p \delta_q)\right)\tilde{f}(\bar{z}) \tag{31}$$

it is possible to obtain more accurate estimations of the average and of the covariance of the function $\tilde{f}(z)$, respectively

$$\bar{y} = \frac{h^2 - n}{h^2}f(\bar{x}) + \frac{1}{2h^2}\sum_{p=1}^{n}\left(\tilde{f}(\bar{x} + hs_{x,p}) - \tilde{f}(\bar{x} - hs_{x,p})\right) \tag{32}$$

$$P_y = \frac{1}{4h^2}\sum_{p=1}^{n}\left(f(\bar{x} + hs_{x,p}) - f(\bar{x} - hs_{x,p})\right)\left(f(\bar{x} + hs_{x,p}) - f(\bar{x} - hs_{x,p})\right)^T$$

$$+ \frac{h^2 - 1}{4h^2}\sum_{p=1}^{n}\left(f(\bar{x} + hs_{x,p}) - f(\bar{x} - hs_{x,p}) - 2f(\bar{x})\right)\left(f(\bar{x} + hs_{x,p}) - f(\bar{x} - hs_{x,p}) - 2f(\bar{x})\right)^T \tag{33}$$

EKF is one of the most known state observers used for tracking the functioning state of a nonlinear system. It is based on the Taylor series approximation formula, that depends only upon the current estimation of the state variables of the system and not upon the uncertainty/variance associated to this estimation.

The so-called DD1 and DD2 filters, described in the document [3], are among the most known state observer, they are used for tracking nonlinear systems and they are based on the Stirling approximation formula. These filters are based to the first and second order approximations, respectively, described by equations (27), (29), (31) and (32).

Deep investigations carried out by the present applicant indicated that one of the characteristics that distinguish the latter approach compared with traditional approaches (such as the EKF), is an approximation of the dynamics of the system that considers not only the current estimation of the state variables but also uncertainties relating to these estimations.

In order to further enhance precision, it has been devised a technique for using filters DD1 and DD2 in an algorithm similar to EKF in which inner parameters of the filters DD1 and DD2 are established through evolutionary algorithms.

Hereinafter, reference will be made exclusively to the case in which the filter to be used is a DD1 filter, but the same considerations apply, mutatis mutandis, also if a filter DD2 or any other filter based on the Stirling approximation formula of any order, even larger than the second order, is used.

Compared to the EKF, the Jacobian matrix of equation (10) is substituted by the finite differences. While the formulas for updating the state are the same of that used in an EKF, formulas for updating covariance matrices are sensibly different.

Given the Cholesky factorizations of the covariance matrices $Q, R,$ of process noise and of measurement noise, that corrupts measures of the outputs of the process, and the Cholesky factorizations of the covariance matrices $\overline{P}, \hat{P}$ associated to the estimation of the state a priori and a posteriori, respectively,

$$Q = S_v S_v^T \qquad R = S_w S_w^T$$
$$\overline{P} = \overline{S}_x \overline{S}_x^T \qquad \hat{P} = \hat{S}_x \hat{S}_x^T \tag{34}$$

for equation (29) it is:

$$S_{x\hat{x}}^{(1)}(k) = \left\{S_{x\hat{x}}^{(1)}(i,j)\right\} = \left\{\left(f_i(\hat{x}_k + h\hat{s}_{x,j}, u_k, \overline{v}_k) - f_i(\hat{x}_k - h\hat{s}_{x,j}, u_k, \overline{v}_k)\right)/2h\right\}$$
$$S_{xv}^{(1)}(k) = \left\{S_{xv}^{(1)}(i,j)\right\} = \left\{\left(f_i(\hat{x}_k, u_k, \overline{v}_k + hs_{v,j}) - f_i(\hat{x}_k, u_k, \overline{v}_k - hs_{v,j})\right)/2h\right\}$$
$$S_{y\overline{x}}^{(1)}(k) = \left\{S_{y\overline{x}}^{(1)}(i,j)\right\} = \left\{\left(g_i(\overline{x}_k + h\overline{s}_{x,j}, \overline{w}_k) - g_i(\overline{x}_k - h\overline{s}_{x,j}, \overline{w}_k)\right)/2h\right\}$$
$$S_{yw}^{(1)}(k) = \left\{S_{yw}^{(1)}(i,j)\right\} = \left\{\left(g_i(\overline{x}_k, \overline{w}_k + hs_{w,j}) - g_i(\overline{x}_k, \overline{w}_k - hs_{w,j})\right)/2h\right\} \tag{35}$$

wherein $\hat{s}_{x,j}, \overline{s}_{x,j}, s_{w,j}, s_{v,j}$ is the j-th column of the matrix $\hat{S}_x, \overline{S}_x, S_w, S_v,$ respectively.

Let us consider the state vector increased of a component $\Delta\breve{x}$ due to process noise:

$$\breve{x} = [\overline{\overline{x}} + \Delta\breve{x}] = \begin{bmatrix} \hat{x} + \Delta x \\ \overline{v} + \Delta v \end{bmatrix} \tag{36}$$

Process noise is assumed to be independent from the state of the system, thus the covariance of $\Delta\breve{x}$ is

$$\hat{P}_{\breve{x}} = \begin{bmatrix} \hat{P} & 0 \\ 0 & Q \end{bmatrix} = \begin{bmatrix} \hat{S}_x & 0 \\ 0 & S_v \end{bmatrix} \begin{bmatrix} \hat{S}_x & 0 \\ 0 & S_v \end{bmatrix}^T = \hat{S}_{\breve{x}} \hat{S}_{\breve{x}}^T \tag{37}$$

Introducing the linear transform $\breve{x} = \hat{S}_{\breve{x}} z$ , the problem of estimating the state may be translated in processing a general function $\tilde{f}(z)$.

For the a priori update of the state equation (27) is used. In this case f represent the nonlinear function that ties the state variables of the system, the inputs and the process noise at step $k$-th to the a priori estimation of the state variables at step $(k+1)$-th. Therefore, by applying equation (27), the following equation is obtained:

$$\overline{x}_{k+1} \approx \tilde{f}(\overline{z}_k) = f(\hat{x}_k, u_k, \overline{v}_k) \tag{38}$$

while, for the a priori update of the covariance matrix of the state, equations (29) and (35) are obtained,

$$\overline{P}(k+1) = \left[ S_{x\hat{x}}^{(1)}(k) \quad S_{xv}^{(1)}(k) \right] \left[ S_{x\hat{x}}^{(1)}(k) \quad S_{xv}^{(1)}(k) \right]^T$$
$$= S_{x\hat{x}}^{(1)}(k) \left( S_{x\hat{x}}^{(1)}(k) \right)^T + S_{xv}^{(1)}(k) \left( S_{xv}^{(1)}(k) \right)^T \tag{39}$$

The Cholesky factor of the covariance matrix of the state is immediately obtainable. Being

$$\overline{S}_x(k+1) = \left[ S_{x\hat{x}}^{(1)} \quad S_{xv}^{(1)} \right] \tag{40}$$

a rectangular matrix is obtained. Through a Householder triangularization, the Cholesky factor of the covariance matrix of the state at step $k+1$ is obtained.

As far as the a posteriori estimation of data of state variables of the system is concerned, the outputs of the process are estimated by using the second of the two nonlinear functions that describe the dynamics of the system, that is:

$$\overline{y}_k = g(\overline{x}_k, \overline{w}_k) \tag{41}$$

As far as the covariance matrix $P_y(k)$ is concerned, associated to the estimation error of the outputs of the process, it is to be noticed that the following matrix

$$S_y(k) = \left[ S_{y\overline{x}}^{(1)}(k) \quad S_{yw}^{(1)}(k) \right] \tag{42}$$

is a Cholesky factor of the matrix $P_y(k)$:

$$P_y(k) = S_y(k) \left( S_y(k) \right)^T \tag{43}$$

The matrices $S_y(k)$ and $\overline{S}_x(k)$ are transformed in square matrices through the Householder triangularization. By substituting equations (35) in equation (30) the following expression for the cross-covariance matrix of the DD1 filter is obtained,

$$P_{xy}(k) = \overline{S}_x(k)\left(S_{\overline{yx}}^{(1)}(k)\right)^T \tag{44}$$

The *a posteriori* state is updated with the well known formula

$$\hat{x}_k = \overline{x}_k + K_k(y_k - \overline{y}_k) \tag{45}$$

wherein the gain $K_k$ of the filter has the following expression:

$$K_k = P_{xy}(k)\left[S_y(k)\left(S_y(k)\right)^T\right]^{-1} \tag{46}$$

The *a posteriori* covariance matrix $P_y(k)$ may be updated with the classic equation

$$\hat{P} = \overline{P} - KP_yK^T \tag{47}$$

or by updating the Cholesky factor of the matrix.

Even for using a DD1 or DD2 filter it is necessary to know the covariance matrices of the process noise, of the measurement noise and of the initial value of the covariance matrix relative to the estimation of the state variables.

This difficulty is overcome, according to an aspect of this invention, by carrying out a preliminary off-line tuning. This preliminary operation is carried out by driving the system according to a pre-established input pattern, sensing the values of output variables and of at least a state variable instant by instant through sensors and updating the covariance matrices of the measurement noise and the process noise and the initial values of the covariance matrix of the state with and evolutionary algorithm such to minimize a pre-established cost function.

Preferably, this cost function is the root mean square of the difference between the estimated values and the respective sensed values.

Once the covariance matrices $\overline{Q}, \overline{R}$ and the initial values of the covariance matrix of the state are determined off-line, the state observer is trained for estimating data of state variables of the system without using the sensor of the state variable. Such a state observer may be used in particular (but not only) for controlling a brushless motor without using any position and/or speed sensor.

In order to better understand how the control method of this invention works, let us refer to the case of a brushless motor, but the same considerations hold mutatis mutandis for any other physical system the functioning of which is to be controlled, such as DC or AC electric motors.

### Application to the control of a brushless motor

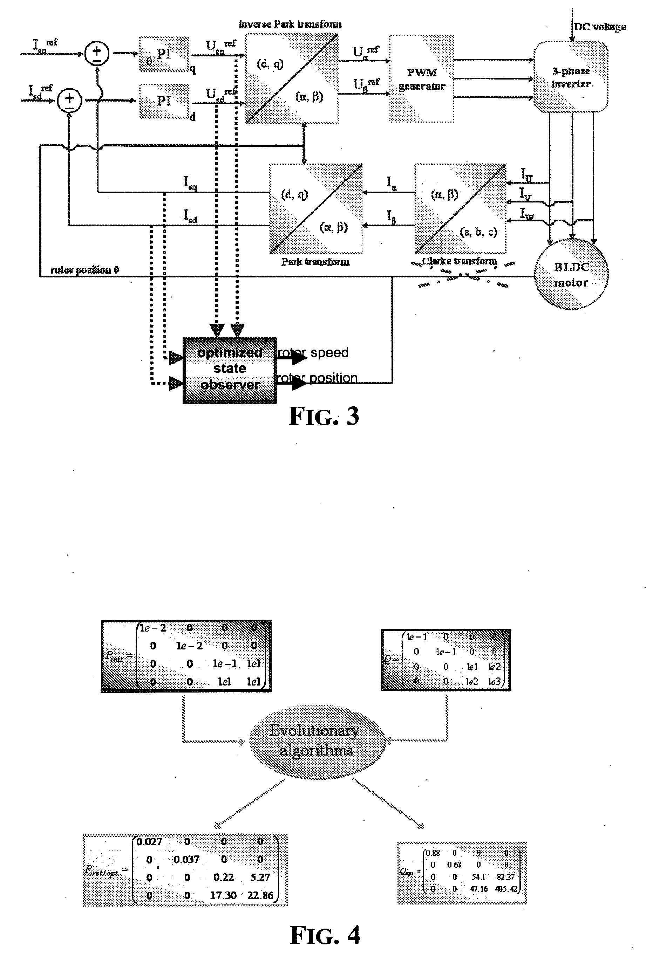

The free-derivative state observer shown above is used for estimating position and speed of a permanent magnet brushless motor. Figure 3 depicts the block diagram of a state observer of this invention OPTIMIZED STATE OBSERVER for controlling in a field oriented mode the brushless motor BLDC motor.

The inputs of the state observer of this invention are the voltages $U_{sq}^{ref}$ and $U_{sd}^{ref}$ generated by the controllers PI that implement a proportional-integral function, that control the electric machine through the PWM stage and the currents $I_{sq}$ and $I_{sd}$ in the rotoric reference system. The values of these currents are obtained by measuring the currents $I_U, I_V$ and $I_W$ and by applying the above mentioned Clarke and Park transforms.

A characteristic of the state observer of this invention consists in that it is capable of estimating speed and position of a brushless motor without using a dedicated sensor (such as resolvers, Hall sensors, encoders and the like). The estimation of the rotor position is used for carrying out the direct and inverse Park transforms.

The initial values of the covariance matrix of the state variables and the covariance matrices associated to the process noise and measurement noise are determined in an off-line tuning phase. Figure 4 shows how the initial value of the covariance matrix of the state variables and how the covariance matrix relative to the process noise are adjusted because of the automatic tuning guided by evolutionary algorithms.

The performances of the state observer are excellent thanks to the tuning procedure of the parameters of the filter.

Compared with other known approaches available in literature, such as the approaches described in the introduction (Luenberger observer, EKF), the state observer of this invention may be used for estimating position and speed of the rotor of a brushless motor even without knowing the initial position of the rotor, but by knowing exclusively its initial speed. This is not a limitation when the initial speed is known (e. g. it is null), for example it the control of the motor starts when it is still.

Also this characteristic distinguishes the method of this invention from other approaches, making it implementable in real-time applications that involve electric machines such as the EPS systems [7].

## EPS (Electric Power Steering) system

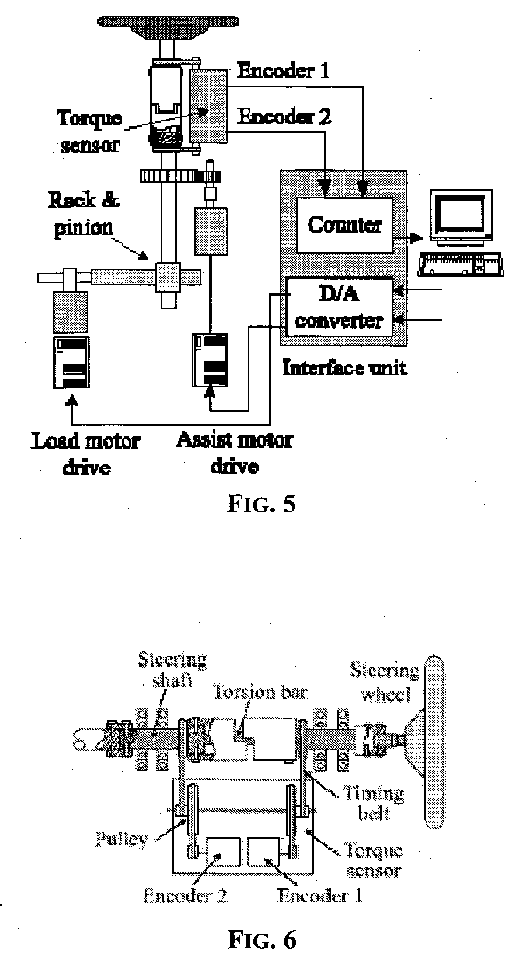

As an application of a system on which to test the method of this invention for controlling a brushless motor, a column type EPS system [1] and [2] has been considered. The brushless motor contained therein is connected to the steering column through torque reducers. Figure 5 describes the experimental set-up of the EPS system in HILS configuration (Hardware-In-the-Loop Simulation). A further brushless motor is used for providing to the rack-pinion system different profiles of load torques.

Through these profiles it is possible to simulate the torque that opposes the steering action of the driver due to the coupling of the wheels of the vehicle with the road during the running of the vehicle. In HILS configuration both brushless motors, the motor that powers the steering by supplying a supplementary steering torque through the torque reduction gears and the motor that supplies an antagonist torque to the rack-pinion system, are controlled by a PC. The torque and the steering angle are measured by a torque sensor mounted on the top of the steering column.

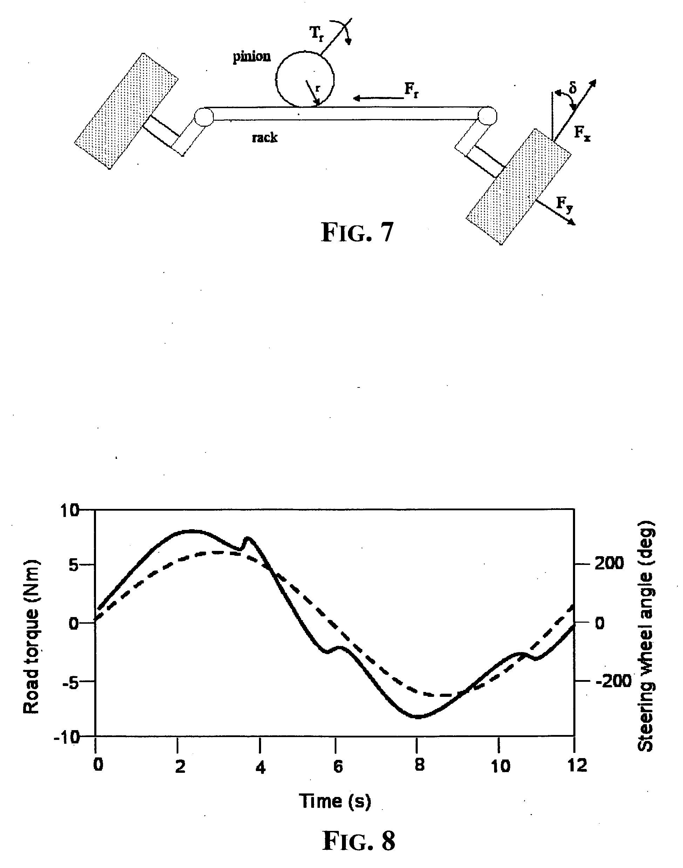

Figure 8 depicts the sensor. The sensor is a torsion bar in which two optical encoders measure respectively the angular position of the steering-wheel $\theta_{SW}$ (steering angle) and the angular position $\theta_{SS}$ in respect to the steering column (that is the angular position in respect to the steering shaft). The steering torque applied by the driver during the motion of the vehicle is given by the following relation,

$$T_S = k_{torsion}\Delta\theta = k_{torsion}\left(\theta_{SW} - \theta_{SS}\right) \qquad (48)$$

wherein $k_{torsion}$ is the torsion rigidity of the torsion bar.

From a mechanic point of view the described EPS system in Figures 5 and 6 may be subdivided into two parts, a steering column and an assisting electric motor. Let $T_s$, $T_l$, $T_m$ be the steering torque, the load torque transmitted from the rack-pinion system to the steering column and the torque generated by the assisting electric motor, respectively. As far as the load torque $T_l$ is concerned, it takes into account the friction between the wheels and the road and the efficiency of the mechanic gears for transmitting torques (rack-pinion, steering shaft and the like). From the equation that describes the mechanical equilibrium of the electric motor,

$$J_m\ddot{\theta}_m + b_M\dot{\theta}_m = T_m - \frac{T_l}{N} \qquad (49)$$

wherein $J_m$ and $b_M$ are the inertia momentum and the dampening coefficient of the electric motor, N is the ratio reduction/transmission relative to the reduction gear that couples the assisting electric motor to the steering column.

In practice, the position $\theta_m$ of the rotor of the electric motor (the rotor is connected to a servo-system that, through a reduction gear allows the motor to transfer the generated torque to the steering torque) and the angle $\theta_{SS}$ sensed by the torque sensor to the steering shaft are tied to the ratio $N$, indeed $\theta_m = N\theta_{SS}$. The equations used for describing the functioning of the brushless motor of this application are equations (4).

In order to complete the model of the EPS system, an estimation of the load torque $T_l$ is required. In order to estimate the resisting torque due to the coupling of the wheels with the road the Dugoff model [5] has been used. Referring to Figure 7, transversal friction $F_y$ and longitudinal friction $F_x$ that act on the wheel during the motion of the vehicle are expressed through the following equations:

$$F_x = \frac{AK_x s}{1-s}$$

$$F_y = \frac{AK_y \tan\alpha}{1-s} \qquad\qquad (50)$$

wherein $K_x$ and $K_y$ represent the longitudinal and the lateral rigidity of the wheel, while $A, s, \alpha$ are respectively the area of contact of the wheel with the road surface, the slipping ratio and the slipping angle. The force $F_R$ transmitted to the rack by friction that acts on the wheels is

$$F_R = F_x \sin\delta + F_y \cos\delta \qquad\qquad (51)$$

wherein $\delta$ is the real steering angle transmitted to the wheel from the steering system. It is tied to the steering angle fixed by the driver through a simple linear equation, $\theta_{SW} = n\delta$. The factor n considers how, in function of the geometric-mechanical characteristics of the EPS system, the steering angle $\theta_{SW}$ imposed by the driver is transmitted to the wheels.

The antagonist torque $T_{road}$ due to the coupling of the wheels with the road is simply obtained by the vector product of the force $F_R$ to which the rack is subjected during the motion of the vehicle and the radius r of the pinion:

$$T_{road} = F_R \times r = \left( \frac{AK_x s}{1-s} \sin\left(\frac{\theta_{sw}}{n}\right) + \frac{AK_y \tan\alpha}{1-s} \cos\left(\frac{\theta_{sw}}{n}\right) \right) \times r \qquad\qquad (52)$$

Figure 8 depicts the graph of the load torque due to friction between the road and the wheels of the vehicle for certain established values of the slipping angle and of the slipping ratio $(s, \alpha)$.

For sake of ease, in the simulation of the EPS system it has been assumed that the load torque $T_1$ coincides with the torque $T_{road}$, that is contributions to $T_l$ due to the efficiency of the steering system have been neglected.

The main functions of an EPS system are the reduction of the steering torque and the improvement of the return of the steering wheel to its start position after a cornering (a displacement describing a J). In a typical cornering, an assisting torque is initially provided to the steering column for reducing the torque that a driver feels while steering. Immediately after the steering action, the EPS system rotates the steering-wheel to its initial position without oscillations and overshoots, that otherwise would be present if the power steering system was not present.

In other words, time intervals in which the control logic circuitry of the EPS is enabled for reducing the steering torque and for rotating the steering wheel in its initial position are distinct.

In the ECU that manage EPS systems two distinct control logics are implemented for these two distinct control/servo-assistance actions. In simulations carried out it has been considered only the first of these two distinct aspects of the action of an EPS system.

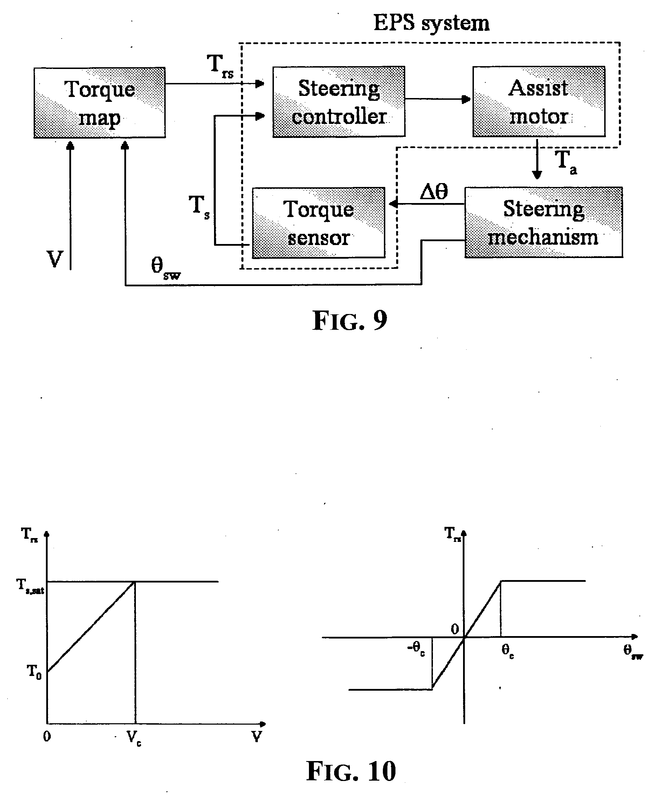

Figure 9 depicts a block diagram of the control logic for reducing the steering torque in an EPS system.

The idea of this control consists in encoding in the block TORQUE MAP the driving style of a driver, that is a function of the speed $V$ of the vehicle and of the steering angle $\theta_{SW}$ established by the driver. The objective of the control is to make that the torque felt by the driver while steering, that is $T_S$, be as close as possible to the reference torque, that is $T_{rs}$, stored in the look-up table of the block TORQUE MAP. The function that gives the steering torque upon the vehicle speed and the steering angle $\theta_{SW}$ may be illustrated as follows:

- it is well known that at low speeds, for example during parking maneuvers or in traffic jams, drivers desire a relevant assisting torque $T_a$ be supplied by the electric motor for driving with a little effort, while at high speeds drivers desire a stronger steering torque, in order to feel more secure while steering, that is a weaker assisting torque $T_a$ is required from the EPS system;
- the assisting torque increases with the steering angle, for example proportionally to it.

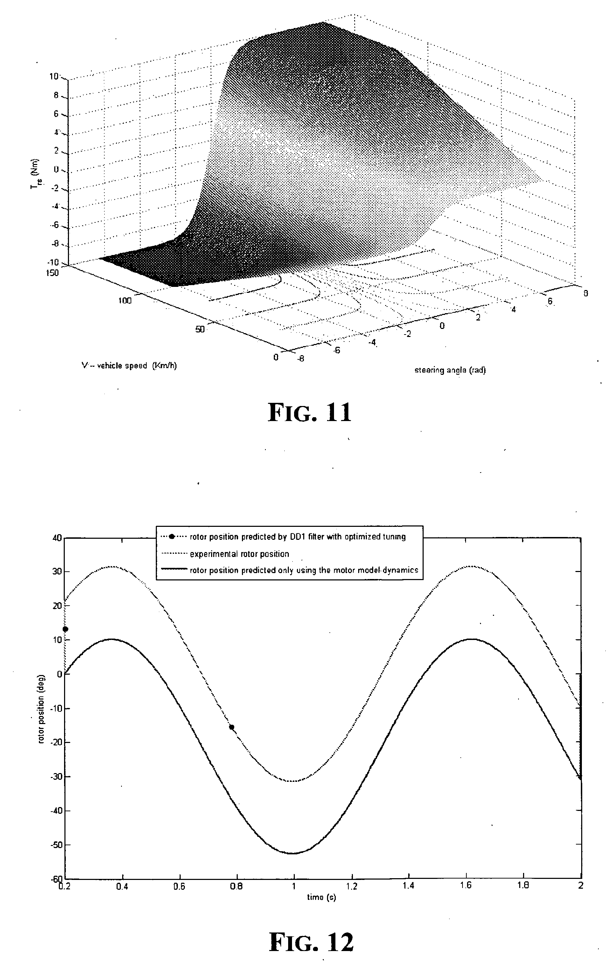

In Figure 10 the graphs of the reference steering torque in function of the speed of the vehicle and of the steering angle are depicted. A sample 3-D representation of a look-up table of the reference steering torques is depicted in Figure 11.

All the mechanical part of the column EPS system described in this chapter have been modeled using the MATLAB/SIMULINK™ tool.

**Test of the model of state observer**

In the architecture of EPS system described in the previous section a model of a permanent magnet brushless machine controlled with a field oriented control technique has been used. The free derivative state observer uses this model for estimating at each simulation step angular position and speed of the rotor of the electric machine. The testing of the model has been carried out on typical pattern of the application of EPS system, that is for sinusoidal waveforms of the steering angle and increasing profiles of the vehicle speed. The results obtained with the simulation demonstrate the effectiveness of this invention.

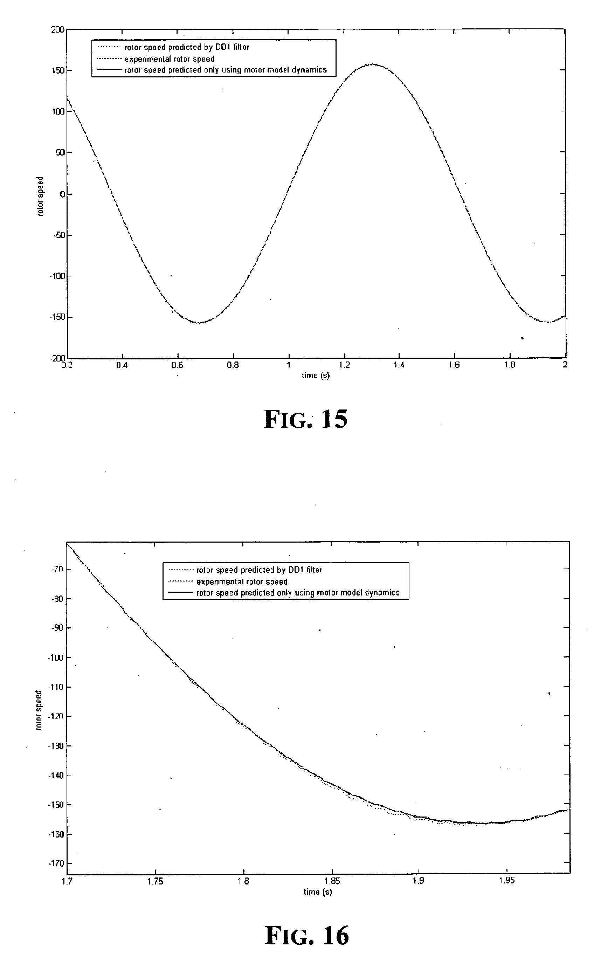

Figures 12, 13, 14, 15, 16 illustrate the results of a simulation of the EPS system in which the kinematics (position and speed) of the rotor of the brushless motor has been estimated on a test pattern by means of the method of this invention and compared with that measured through dedicated sensors.

Comparing the results it is evident that only with the method of this invention it is possible to obtain accurate estimations even if the initial position of the rotor is not known. Indeed, in the graph of Figure 12, the curve, that represent the graph of the position of the rotor obtained by using solely the equations of the dynamics of the system, do not track the sensed values because it is not possible to compensate the fact that the initial position of the rotor is unknown. The waveform is sinusoidal, but it is translated in respect to the sensed waveform by a certain amount.

This result shows that the method of this invention is capable of estimating correctly the position of the rotor even when the assumed initial state of the system is not accurately determined. Such a situation could occur when the electric motor is started-up, because the initial speed of the rotor is known (it is null) but it could not be possible to determine precisely its initial position.

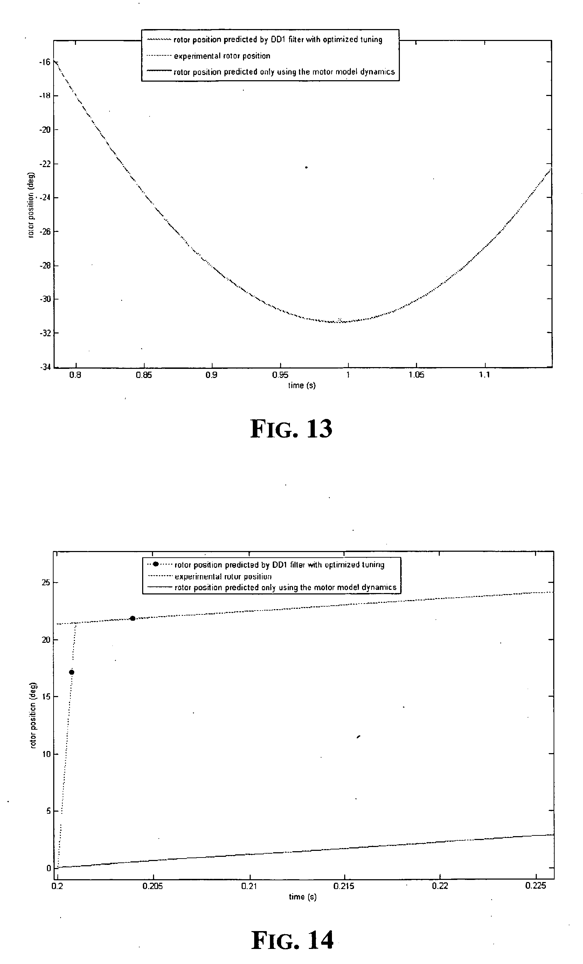

Figure 14 is a detail view of the graph of Figure 12. It is evident how fast the values estimated with the method of this invention are corrected for tracking the waveform that describes the measured position of the rotor by a dedicated sensor.

Moreover, the method of this invention is effective even when both speed and initial position of the rotor are unknown.

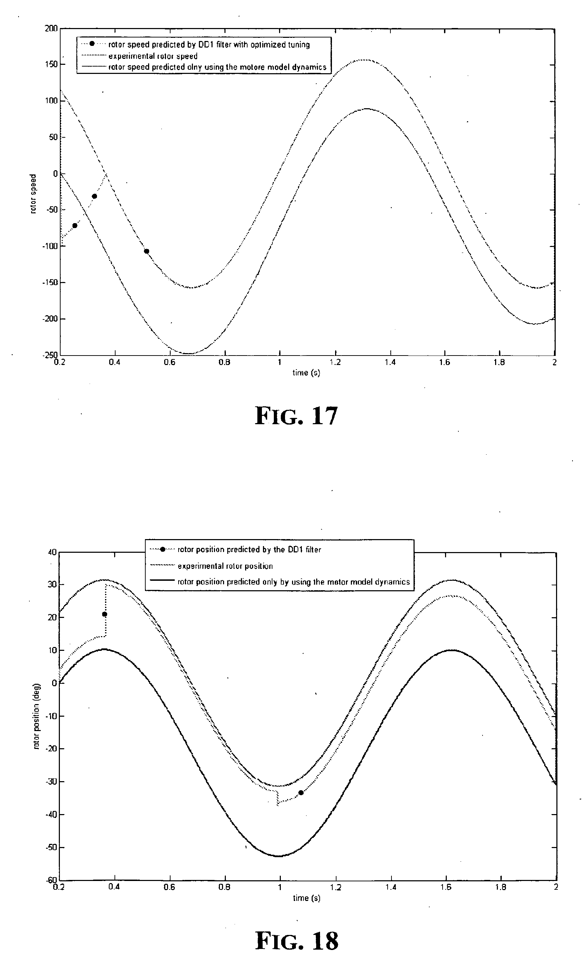

Figure 18 depicts the result of a simulation in which also the initial speed of the rotor has been supposed unknown. This situation could occur for example in an EPS application when, because of the fact that the vehicle is running fast in a highway, the electric motor is disabled, or in an e-brake application when, because of an abrupt brake after having brought a piston in its rest position, the rotor of an electric motor is disconnected from the servo-system that couples it to the piston. In both cases, the method of this invention is capable of resuming in a short time an efficient tracking of the kinematics of the rotor even using an inaccurate determination of the initial conditions.

It is worth remarking an important aspect of this invention: parameters of the filter DD1 are optimized through evolutionary (genetic) algorithms, such as the PSOA (Particle Swarm Optimization Algorithm) or ES (Evolution Strategies). The optimized tuning procedure of this invention not only simplifies the set-up phase of the considered model of the state observer but, which is of paramount importance, allows to enhance the tracking performances.

Figure 18 shows the results that have been obtained, after having spent a very long time for searching the optimal values of parameters of the filter in the estimation of the angular position of the rotor of the brushless machine on the same specific patterns of the same application considered in Figures 12, 13 and 14. With an optimized tuning of the parameters of the filter, it is possible to compensate immediately the fact that the initial angular position of the rotor is unknown and it is possible to have a negligible error in steady-state conditions.

From the test of the described model in a simulation of an EPS application, it is evident that the method for estimating data of state variables can be used for tracking the kinematics of the rotor of a brushless motor. A device of this invention for estimating speed and position of a rotor of a motor could replace a dedicated sensor used for monitoring the rotor position.

In safety critical applications (for example the e-brake) in which two or more sensors of different kind are used, such a device could be used instead of one of these sensors. For non safety-critical applications, it could be used for a sensorless control of the brushless electric machine.

Finally, independently from the type of application, the method of this invention could be used in a diagnostic device for sensing, possibly in advance, abnormal functioning of certain parts of the system, such as for example possible faults of sensors, of actuators, or even variations of intrinsic structural parameters of the system. Depending on the cases, these faults could be simply diagnosed for signaling the driver that parts/subsystems of the vehicle need to be checked, or could be balanced/compensated by adjusting internal parameters of the control system.

## EP 1 885 054 B1

### REFERENCES

[1] J. H. Kim, J. B. Song, Control Logic for an Electric Power Steering System using Assist Motor, Mechatronics 12, pp. 447-459, 2002.

[2] A. Badawy, J. Zuraski, F. Bolourchi and A. Chandy, Modeling and Analysis of an Electric Power Steering System, SAE paper 1999-01-0399, 1999.

[3] M. Norgaard, N. K. Poulsen, O. Ravn, Advances in Derivative-Free State Estimation for Nonlinear Systems, Department of Mathematical Modelling and Department of Automation Technical University of Denmark, technical report: IMM-REP-1998-15.

[4] W. Reinelt, C. Lundquist, and H. Johansson, On-Line Sensor Monitoring in an Active Front Steering System using Extended Kalman Filter, SAE paper 2005-01-1271.

[5] H. Dugoff, P.S. Fancher, An Analysis of the tyre Traction Properties and their Influenceon Vehicle Dynamic Performance, SAE paper 700377, 1970.

[6] H.G. Beyer, The Theory of Evolution Strategies, Natural Computing Series, Springer, 2001.

[7] P. Vas, Sensorless Vector and Direct Torque Control, Oxford Science Pubblications, Springer, 1998.

### Claims

1. A method for estimating data of state variables of a system, whereby an input-state-output mathematical model of the system is known, comprising the following steps:

   installing a circuit for estimating data of state variables of the system, comprising at least a filter implementing an estimation according to a Stirling approximation formula of any order, in function of input data, output data of the system and of parameters of the filter representing values of components of covariance matrices of process noise and of measurement noise of the system;
   training said estimator by carrying out off-line the steps of:

   supplying the system with pre-established input patterns and detecting corresponding output data and a datum of at least a state variable of the system,
   estimating said a datum of said at least one state variable of the system for said input pre-established patterns,
   adjusting said parameters of the filter with an evolutionary algorithm for minimizing a pre-established cost function defined in function of the estimated output data of the system, of the sensed output data, of said at least one estimated datum of state of the system and of the corresponding sensed datum of state;
   estimating said data of state of the system during the normal functioning using said off-line trained estimator.

2. The method of claim 1, wherein said pre-established cost function is the root means square of the difference between the estimated output data of the system and the sensed output data and between said at least one estimated datum of state of the system and the corresponding sensed datum of state.

3. The method of claim 1, wherein said evolutionary algorithm is a PSOA or a ES.

4. The method of claim 1, wherein said filter is a DD1 or a DD2 filter.

5. A method for estimating position and speed of the rotor of a brushless motor controlled in a feedback loop that includes circuit means for generating feedback signals representing the currents ($I_{sq}$, $I_{sd}$) circulating in the motor in respect to a rotoric reference system in function of the currents sensed in the windings of the motor, a controller input with said representative signals $(I_{sq}^{ref}, \quad I_{sd}^{ref})$, generating respective control voltages $(U_{sq}^{ref}, U_{sd}^{ref})$ in said rotoric reference system, a power stage input with said control voltages $(U_{sq}^{ref}, U_{sd}^{ref})$ and driving said motor in PWM mode for nullifying the difference between said feedback signals $(I_{sq}, I_{sd})$ and the respective reference signals $(I_{sq}^{ref}, I_{sd}^{ref})$, said method comprising executing at each PWM cycle the following operations:

- sampling said control voltages $(U_{sq}^{ref}, U_{sd}^{ref})$;

- calculating values of said currents $(I_{sq}, I_{sd})$ circulating in the motor in respect to the rotoric reference in function of the estimated position of the rotor at the current PWM cycle;

- estimating said values of position and speed of the rotor at the next PWM cycle through the method of claim 1 in function of said samples of the control voltages $(U_{sq}^{ref}, U_{sd}^{ref})$ and of the values of said currents $(I_{sq}, I_{sd})$.

6. The method of claim 5, wherein the values of said currents $(I_{sq}, I_{sd})$ circulating in the motor referred to the rotoric reference system are obtained from sensed samples of the current flowing through the windings of the motor by carrying out a Clarke transform followed by a Park transform defined in function of the estimated position of the rotor at the current PWM cycle.

7. A device for generating signals representative of the speed and of the position of the rotor of a brushless motor controlled in a feedback loop that includes circuit means adapted to generate feedback signals representing the currents $(I_{sq}, I_{sd})$ circulating in the motor in respect to a rotoric reference system in function of the currents sensed in the windings of the motor, a controller input with said representative signals $(I_{sq}^{ref}, I_{sd}^{ref})$, adapted to generate respective control voltages $(U_{sq}^{ref}, U_{sd}^{ref})$ in said rotoric reference system, a power stage input with said control voltages $(U_{sq}^{ref}, U_{sd}^{ref})$ and adapted to drive said motor in PWM mode for nullifying the difference between said feedback signals $(I_{sq}, I_{sd})$ and the respective reference signals $(I_{sq}^{ref}, I_{sd}^{ref})$, said =device comprising a DD1 or DD2 filter adapted to implement an estimation according to a Stirling approximation formula of any order, is input with said control voltages $(U_{sq}^{ref}, U_{sd}^{ref})$ and said feedback signals $(I_{sq}, I_{sd})$ and is trained to generate estimated values of position and speed of the rotor according to the method of claim 1.

8. A device for feedback controlling a brushless motor, comprising:

circuit means adapted to generate feedback signals representing the currents $(I_{sq}, I_{sd})$ circulating in the motor in respect to a rotoric reference system in function of the currents sensed in the windings of the motor and in function of the position of the rotor at the current PWM;

a controller input with said representative signals $(I_{sq}^{ref}, I_{sd}^{ref})$, adapted to generate respective control voltages $(U_{sq}^{ref}, U_{sd}^{ref})$ in said rotoric reference system;

a power stage input with said control voltages $(U_{sq}^{ref}, U_{sd}^{ref})$ and adapted to drive said motor in PWM mode for nullifying the difference between said feedback signals $(I_{sq}, I_{sd})$ and the respective reference signals $(I_{sq}^{ref}, I_{sd}^{ref})$;

a device of claim 6 adapted to generate signals representing the speed and position of the rotor at the successive PWM cycle.

9. A power steering system adapted to generate an auxiliary steering torque $(T_a)$ while steering, comprising:

a brushless motor adapted to generate said auxiliary torque ($T_a$) in function of control signals input thereto;
a sensor adapted to generate a signal representing a total torque ($T_S$) that driver must balance;
a control circuitry of the motor comprising:

the device of claim 8 adapted to control said motor in function of reference signals $(I_{sq}^{ref}, I_{sd}^{ref})$ of the currents circulating in the motor referred to a rotoric reference system,

circuit means adapted to generate said reference signals $(I_{sq}^{ref}, I_{sd}^{ref})$ in function of the total torque ($T_S$) and of a respective reference values ($T_{rs}$).

10. The power steering system of claim 9, further comprising circuit means adapted to establish said reference value ($T_{rs}$) in function of the vehicle speed on which the power steering system is installed and of the steering angle of the vehicle.

11. Program for computer loadable in the internal memory of a computer, comprising a software code adapted to carry out the steps of the method according to one of claims from 1 to 6 when said code is executed by said computer.

**Patentansprüche**

1. Verfahren zum Schätzen von Daten von Zustandsvariablen eines Systems, wodurch ein mathematisches Eingang-Zustand-Ausgang-Modell des Systems bekannt ist, das die folgenden Schritte aufweist:

Installieren einer Schaltung zum Schätzen von Daten von Zustandsvariablen des Systems, das mindestens einen Filter aufweist, der eine Schätzung gemäß einer Stirling-Näherungsformel irgendeiner Ordnung als Funktion von Eingangsdaten, Ausgangsdaten des Systems und von Parametern der Filter ausführt, die Werte von Komponenten von Kovarianzmatrizen von Prozeßstörungen und von Meßstörungen des Systems repräsentieren;
Trainieren der Schätzvorrichtung, indem offline die Schritte ausgeführt werden:

Versorgen des Systems mit im voraus festgelegten Eingangsmustern und Ermitteln entsprechender Ausgangsdaten und eines Datenwerts mindestens einer Zustandsvariablen des Systems,
Schätzen des Datenwerts der mindestens einen Zustandsvariablen des Systems für die im voraus festgelegten Eingangsmuster,
Einstellen der Parameter des Filters mit einem evolutionären Algorithmus, um eine im voraus festgelegte Kostenfunktion zu minimieren, die als Funktion der geschätzten Ausgangsdaten des Systems, der abgetasteten Ausgangsdaten, des mindestens einen geschätzten Zustandsdatenwerts des Systems und des entsprechenden abgetasteten Zustandsdatenwerts definiert ist;
Schätzen der Zustandsdaten des Systems während des normalen Funktionierens unter Verwendung der offline trainierten Schätzvorrichtung.

2. Verfahren nach Anspruch 1, wobei die im voraus festgelegte Kostenfunktion der Effektivwert der Differenz zwischen den geschätzten Ausgangsdaten des Systems und den abgetasteten Ausgangsdaten und zwischen dem mindestens einen geschätzten Zustandsdatenwert des Systems und dem entsprechenden abgetasteten Zustandsdatenwert ist.

3. Verfahren nach Anspruch 1, wobei der evolutionäre Algorithmus ein PSOA oder ein ES ist.

4. Verfahren nach Anspruch 1, wobei der Filter ein DD1- oder ein DD2-Filter ist.

5. Verfahren zum Schätzen der Position und der Drehzahl des Rotors eines bürstenlosen Motors, der in einer Rückkopplungsschleife gesteuert wird, die umfaßt: Schaltungsmittel zum Erzeugen von Rückkopplungssignalen, die die Ströme ($I_{sq}$, $I_{sd}$) die im Motor bezüglich eines Rotorbezugssystems fließen, als Funktion der Ströme repräsentieren, die in den Wicklungen des Motors abgetastet werden, eine Steuereinrichtung, in die die repräsentativen Signale

$(I_{sq}^{ref}, I_{sd}^{ref})$ eingegeben werden, die jeweilige Steuerspannungen $(U_{sq}^{ref}, U_{sd}^{ref})$ im Rotorbezugssystem er-

zeugt, eine Leistungsstufe, in die die Steuerspannungen $(U_{sq}^{ref}, U_{sd}^{ref})$ eingegeben werden und die den Motor in einer PWM-Betriebsart betreibt, um die Differenz zwischen den Rückkopplungssignalen ($I_{sq}$, $I_{sd}$) und den jeweiligen Bezugssignalen $(I_{sq}^{ref}, I_{sd}^{ref})$ auf null zu bringen, wobei das Verfahren das Ausführen in jeder PWM-Periode der folgenden Operationen aufweist:

- Abtasten der Steuerspannungen $(U_{sq}^{ref}, U_{sd}^{ref})$;

- Berechnen von Werten der Ströme ($I_{sq}$, $I_{sd}$) die im Motor bezüglich des Rotorbezugssystems als Funktion der geschätzten Position des Rotors in der gegenwärtigen PWM-Periode fließen;
- Schätzen der Werte der Position und der Drehzahl des Rotors in der nächsten PWM-Periode durch das Verfahren nach Anspruch 1 als Funktion der Abtastwerte der Steuerspannungen $(U_{sq}^{ref}, U_{sd}^{ref})$ und der Werte der Ströme ($I_{sq}$, $I_{sd}$).

6. Verfahren nach Anspruch 5, wobei die Werte der Ströme ($I_{sq}$, $I_{sd}$) die im Motor bezüglich des Rotorbezugssystems fließen, aus abgetasteten Abtastwerten des Stroms erhalten werden, der durch die Wicklungen des Motors fließt, indem eine Clarke-Transformation gefolgt von einer Park-Transformation ausgeführt werden, die als Funktion der geschätzten Position des Rotors in der gegenwärtigen PWM-Periode definiert ist.

7. Vorrichtung zum Erzeugen von Signalen, die für die Drehzahl und die Position des Rotors eines bürstenlosen Motors repräsentativ sind, der in einer Rückkopplungsschleife gesteuert wird, die umfaßt: Schaltungsmittel, die eingerichtet sind, Rückkopplungssignale zu erzeugen, die die Ströme ($I_{sq}$, $I_{sd}$) die im Motor bezüglich eines Rotorbezugssystems fließen, als Funktion der Ströme repräsentieren, die in den Wicklungen des Motors abgetastet werden, eine Steuereinrichtung, in die die repräsentativen Signale $(I_{sq}^{ref}, I_{sd}^{ref})$ eingegeben werden, die eingerichtet ist, jeweilige Steuerspannungen $(U_{sq}^{ref}, U_{sd}^{ref})$ im Rotorbezugssystem zu erzeugen, eine Leistungsstufe, in die die Steuerspannungen $(U_{sq}^{ref}, U_{sd}^{ref})$ eingegeben werden und die eingerichtet ist, den Motor in einer PWM-Betriebsart zu betreiben, um die Differenz zwischen den Rückkopplungssignalen ($I_{sq}$, $I_{sd}$) und den jeweiligen Bezugssignalen $(I_{sq}^{ref}, I_{sd}^{ref})$ auf null zu bringen, wobei in die Vorrichtung, die einen DD1- oder DD2-Filter aufweist, der eingerichtet ist, eine Schätzung gemäß einer Stirling-Näherungsformel irgendeiner Ordnung auszuführen, die Steuerspannungen $(U_{sq}^{ref}, U_{sd}^{ref})$ und die Rückkopplungssignale ($I_{sq}$, $I_{sd}$) eingegeben werden und sie trainiert ist, geschätzte Werte der Position und der Drehzahl des Rotors gemäß des Verfahrens nach Anspruch 1 zu erzeugen.

8. Vorrichtung zur Rückkopplungssteuerung eines bürstenlosen Motors, die aufweist:

Schaltungsmittel, die eingerichtet sind, Rückkopplungssignale zu erzeugen, die die Ströme ($I_{sq}$, $I_{sd}$), die im Motor fließen, in Bezug auf ein Rotorbezugssystem als Funktion der Ströme, die in den Wicklungen des Motors abgetastet werden und als Funktion der Position des Rotors in der gegenwärtigen PWM repräsentieren;

eine Steuereinrichtung, in die die repräsentativen Signale $(I_{sq}^{ref}, I_{sd}^{ref})$ eingegeben werden, die eingerichtet ist, jeweilige Steuerspannungen $(U_{sq}^{ref}, U_{sd}^{ref})$ im Rotorbezugssystem zu erzeugen; eine Leistungsstufe, in die die Steuerspannungen $(U_{sq}^{ref}, U_{sd}^{ref})$ eingegeben werden und die eingerichtet ist, den Motor in einer PWM-Betriebsart zu betreiben, um die Differenz zwischen den Rückkopplungssignalen ($I_{sq}$, $I_{sd}$) und den jeweiligen Bezugssignalen $(I_{sq}^{ref}, I_{sd}^{ref})$ auf null zu bringen;

eine Vorrichtung nach Anspruch 6, die eingerichtet ist, Signale zu erzeugen, die die Drehzahl und die Position

# EP 1 885 054 B1

des Rotors in einer nachfolgenden PWM-Periode repräsentieren.

9. Servolenkungssystem, das eingerichtet ist, ein Hilfslenkungsdrehmoment ($T_a$) während des Lenkens zu erzeugen, das aufweist:

einen bürstenlosen Motor, der eingerichtet ist, das Hilfsdrehmoment ($T_a$) als Funktion von Steuersignalen zu erzeugen, die darin eingegeben werden;
einen Sensor, der eingerichtet ist, ein Signal zu erzeugen, das ein Gesamtdrehmoment ($T_s$) repräsentiert, das ein Fahrer ausgleichen muß;
einen Steuerschaltungskomplex des Motors, der aufweist:

die Vorrichtung nach Anspruch 8, die eingerichtet ist, den Motor als Funktion von Bezugssignalen ($I_{sq}^{ref}, I_{sd}^{ref}$) der Ströme zu steuern, die im Motor bezüglich eines Rotorbezugssystems fließen,

Schaltungsmittel, die eingerichtet sind, die Bezugssignale ($I_{sq}^{ref}, I_{sd}^{ref}$) als Funktion des Gesamtdrehmoments ($T_s$) und eines jeweiligen Bezugswerts ($T_{rs}$) zu erzeugen.

10. Servolenkungssystem nach Anspruch 9, das ferner Schaltungsmittel aufweist, die eingerichtet sind, den Bezugswert ($T_{rs}$) als Funktion der Geschwindigkeit des Fahrzeugs, in das das Servolenkungssystem eingebaut ist, und des Lenkwinkels des Fahrzeugs festzulegen.

11. Programm für einen Computer, das in den internen Speicher eines Computers ladbar ist, das einen Softwarecode aufweist, der eingerichtet ist, die Schritte des Verfahrens nach einem der Ansprüche 1 bis 6 auszuführen, wenn der Code durch den Computer ausgeführt wird.

**Revendications**

1. Procédé d'estimation de données de variables d'état d'un système, par lequel un modèle mathématique entrée-état-sortie du système est connu, comprenant les étapes suivantes :

installer un circuit pour estimer des données de variables d'état du système, comprenant au moins un filtre mettant en oeuvre une estimation en accord avec une formule d'approximation de Stirling d'ordre quelconque, en fonction de données d'entrée, de données de sortie du système et de paramètres du filtre représentant des valeurs de composantes de matrices de covariance de bruit de processus et de bruit de mesure du système ;
faire un apprentissage de l'estimateur en réalisant les étapes hors-ligne suivantes :

fournir au système des modèles d'entrée préétablis et détecter des données de sortie correspondantes et une donnée d'au moins une variable d'état du système,
estimer la donnée de ladite au moins une variable d'état du système pour les modèles d'entrée préétablis,
régler les paramètres du filtre avec un algorithme évolutif pour minimiser une fonction de coût préétablie définie en fonction des données de sortie estimées du système, des données de sortie détectées, de ladite au moins une donnée estimée de l'état du système et de la donnée d'état détectée correspondante ;
estimer les données d'état du système pendant le fonctionnement normal en utilisant l'estimateur ayant subi l'apprentissage hors-ligne.

2. Procédé selon la revendication 1, dans lequel la fonction de coût préétablie est la moyenne quadratique de la différence entre les données de sortie estimées du système et les données de sortie détectées et entre ladite au moins une donnée d'état estimée du système et la donnée d'état détectée correspondante.

3. Procédé selon la revendication 1, dans lequel l'algorithme évolutif est un algorithme PSOA ou ES.

4. Procédé selon la revendication 1, dans lequel le filtre est un filtre DD1 ou DD2.

5. Procédé d'estimation de la position et de la vitesse du rotor d'un moteur sans balais contrôlé dans une boucle d'asservissement qui comprend des moyens de circuit pour produire des signaux de réaction représentant les courants ($I_{sq}$, $i_{sd}$) circulant dans le moteur par rapport à un système de référence rotorique en fonction des courants détectés dans les enroulements du moteur, un contrôleur recevant en entrée lesdits signaux représentatifs ($I_{sq}^{ref}$, $I_{sd}^{ref}$), produire des tensions de commande respectives ($U_{sq}^{ref}$, $U_{sd}^{ref}$) dans le système de référence rotorique, un étage de puissance recevant en entrée les tensions de commande ($U_{sq}^{ref}$, $U_{sd}^{ref}$) et pilotant le moteur en mode PWM pour annuler la différence entre les signaux de réaction ($I_{sq}$, $i_{sd}$) et les signaux de référence respectifs ($I_{sq}^{ref}$, $I_{sd}^{ref}$), le procédé comprenant l'exécution à chaque cycle PWM des opérations suivantes :

échantillonner les tensions de commande ($U_{sq}^{ref}$, $U_{sd}^{ref}$) ;

calculer les valeurs des courants ($I_{sq}$, $i_{sd}$) circulant dans le moteur par rapport à la référence rotorique en fonction de la position estimée du rotor au cycle PWM courant ;

estimer les valeurs de position et de vitesse du rotor au cycle PWM suivant par l'intermédiaire du procédé de la revendication 1 en fonction des échantillons des tensions de commande ($U_{sq}^{ref}$, $U_{sd}^{ref}$) et des valeurs des courants ($I_{sq}$, $I_{sd}$).

6. Procédé selon la revendication 5, dans lequel les valeurs des courants ($I_{sq}$, $i_{sd}$) circulant dans le moteur, référencées par rapport au système de référence rotorique, sont obtenues à partir d'échantillons détectés du courant circulant dans les enroulements du moteur en effectuant une transformation de Clarke suivie d'une transformation de Park définies en fonction de la position estimée du rotor au cycle PWM courant.

7. Dispositif pour produire des signaux représentatifs de la vitesse et de la position du rotor d'un moteur sans balais contrôlé dans une boucle d'asservissement qui comprend des moyens de circuit aptes à produire des signaux de réaction représentant les courants ($I_{sq}$, $I_{sd}$) circulant dans le moteur par rapport à un système de référence rotorique en fonction des courants détectés dans les enroulements du moteur, un contrôleur recevant en entrée les signaux représentatifs ($I_{sq}^{ref}$, $I_{sd}^{ref}$), apte à produire des tensions de commande respectives ($U_{sq}^{ref}$, $U_{sd}^{ref}$) dans le système de référence rotorique, un étage de puissance recevant en entrée les tensions de commande ($U_{sq}^{ref}$, $U_{sd}^{ref}$) et apte à piloter le moteur en mode PWM pour annuler la différence entre les signaux de réaction ($I_{sq}$, $i_{sd}$) et les signaux de référence respectifs ($I_{sq}^{ref}$, $I_{sd}^{ref}$), le dispositif comprenant un filtre DD1 ou DD2 apte à mettre en oeuvre une estimation en fonction d'une formule d'approximation de Stirling d'ordre quelconque, recevant en entrée les tensions de commande ($U_{sq}^{ref}$, $U_{sd}^{ref}$) et les signaux de réaction ($I_{sq}$, $I_{sd}$) et ayant subi un apprentissage pour produire des valeurs estimées de position et de vitesse du rotor en accord avec le procédé de la revendication 1.

8. Dispositif pour une commande d'asservissement d'un moteur sans balais, comprenant :

des moyens de circuit aptes à produire des signaux de réaction représentant les courants ($I_{sq}$, $I_{sd}$) circulant dans le moteur par rapport à un système de référence rotorique en fonction des courants détectés dans les enroulements du moteur et en fonction de la position du rotor au PWM courant ;

un contrôleur recevant en entrée les signaux représentatifs $(I_{sq}^{ref}, I_{sd}^{ref})$, apte à produire des tensions de commande respectives $(U_{sq}^{ref}, U_{sd}^{ref})$ dans le système de référence rotorique ;

un étage de puissance recevant en entrée les tensions de commande $(U_{sq}^{ref}, U_{sd}^{ref})$ et apte à piloter le moteur en mode PWM pour annuler la différence entre les signaux de réaction ($I_{sq}$, $I_{sd}$) et les signaux de référence respectifs $(I_{sq}^{ref}, I_{sd}^{ref})$ ;

un dispositif selon la revendication 6 apte à produire des signaux représentant la vitesse et la position du rotor au cycle PWM suivant.

9. Système de direction assistée apte à produire un couple de braquage auxiliaire ($T_a$) pendant le braquage, comprenant :

un moteur sans balais apte à produire le couple auxiliaire ($T_a$) en fonction de signaux de commande qui lui sont fournis ;
un capteur apte à produire un signal représentant un couple total ($T_S$) qu'un pilote doit équilibrer ;
un circuit de commande du moteur comprenant :

le dispositif selon la revendication 8 apte à commander le moteur en fonction de signaux de référence $(I_{sq}^{ref}, I_{sd}^{ref})$ des courants circulant dans le moteur, référencés par rapport à un système de référence rotorique,

des moyens de circuit aptes à produire les signaux de référence $(I_{sq}^{ref}, I_{sd}^{ref})$ en fonction du couple total ($T_S$) et d'une valeur de référence respective ($T_{rs}$).

10. Système de direction assistée selon la revendication 9, comprenant en outre des moyens de circuit aptes à établir ladite valeur de référence (Trs) en fonction de la vitesse du véhicule sur lequel le système de direction assistée est installé et de l'angle de braquage du véhicule.

11. Programme pour ordinateur chargeable dans la mémoire interne d'un ordinateur, comprenant un code de logiciel apte à réaliser les étapes de procédé selon l'une quelconque des revendications 1 à 6 lorsque ledit code est exécuté par l'ordinateur.

**FIG. 1**

**FIG. 2**

FIG. 3

FIG. 4

27

FIG. 5

FIG. 6

**FIG. 7**

**FIG. 8**

EPS system

Torque map → $T_{rs}$ → Steering controller → Assist motor

$T_s$

$\theta_{sw}$

V

Torque sensor ← $\Delta\theta$ ← Steering mechanism

$T_a$

FIG. 9

$T_{rs}$

$T_{s,sat}$

$T_0$

0    $V_c$    V

$T_{rs}$

0

$-\theta_c$    $\theta_c$    $\theta_{sw}$

FIG. 10

FIG. 11

FIG. 12

**FIG. 13**

**FIG. 14**

**FIG. 15**

**FIG. 16**

**FIG. 17**

**FIG. 18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050007044 A

### Non-patent literature cited in the description

- **Alma Y. Alanis et al.** Discrete-time recurrent neural induction motor control using Kalman learning. *IJCNN 2006, International Joint Conference on Neural Networks,* July 2006, 1993-2000
- **J. H. KIM ; J. B. SONG.** Control Logic for an Electric Power Steering System using Assist Motor. *Mechatronics,* 2002, vol. 12, 447-459
- **A. BADAWY ; J. ZURASKI ; F. BOLOURCHI ; A. CHANDY.** Modeling and Analysis of an Electric Power Steering System. *SAE paper 1999-01-0399,* 1999
- **M. NORGAARD ; N. K. POULSEN ; O. RAVN.** *Advances in Derivative-Free State Estimation for Nonlinear Systems*
- **W. REINELT ; C. LUNDQUIST ; H. JOHANSSON.** On-Line Sensor Monitoring in an Active Front Steering System using Extended Kalman Filter. *SAE paper 2005-01-1271*
- **H. DUGOFF ; P.S. FANCHER.** An Analysis of the tyre Traction Properties and their Influence on Vehicle Dynamic Performance. *SAE paper 700377,* 1970
- **H.G. BEYER.** The Theory of Evolution Strategies. Springer, 2001
- **P. VAS.** Sensorless Vector and Direct Torque Control. Springer, 1998